# EUROPÄISCHE PATENTSCHRIFT

(11) **EP 1 000 821 B1**
(45) Veröffentlichungstag und Bekanntmachung des Hinweises auf die Patenterteilung: **07.05.2003**
(21) Anmeldenummer: 99121135.0
(22) Anmeldetag: 22.10.1999
(51) Int. Cl.: B60R 21/34, B62D 29/00, B32B 31/00, B62D 25/10

(54) **Karosseriehaube, insbesondere Fronthaube eines Kraftfahrzeugs**
Body hood, particulary the front hood of a motor vehicle
Capote de carosserie, notamment un capot de front d'un véhicule a moteur

(30) Priorität: 09.11.1998 DE 19851472
(43) Veröffentlichungstag der Anmeldung: 17.05.2000
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE); Ries, Oskar, Dr., 38524 Sassenburg (DE); Wohllebe, Thomas, Dipl.Ing., 38110 Braunschweig (DE)

(56) Entgegenhaltungen:
- DE-A- 1 755 512
- DE-A- 3 013 022
- DE-A- 3 345 576
- US-A- 5 706 908

## Beschreibung

Die Erfindung betrifft eine Karosseriehaube, insbesondere eine Fronthaube eines Kraftfahrzeugs nach dem Oberbegriff des Anspruchs 1. Eine derartige Karosseriehaube ist aus der US-A-4 950 522 bekannt.

Bei einer Fußgänger-Fahrzeug-Kollision, insbesondere bei einem Frontaufprall eines Fahrzeugs auf einen Fußgänger wird dieser an den Füßen meist ausgehebelt und schlägt mit dem Oberkörper und Kopf auf die Fronthaube. Zum Schutz von Fußgängern bei einem Aufprall auf die Fronthaube ist es bereits bekannt, diese in einem mittleren Haubenwandbereich als potentiellem Aufschlagbereich eines Fußgängers nachgiebig und verformbar insbesondere auch als Verbundteil aufzubauen.

Zudem ist eine Sicherheitseinrichtung an einem Fahrzeug zum Schutz von Fußgängern und Radfahrern bekannt (DE 30 13 022 C1), bei der ein am Vorderwagen nach unten aufklappbares Auffangteil in der Art einer Räumschaufel mit einem aufblasbaren, bei einem Aufprall aktivierbaren Airbag vorgesehen ist. In einer ähnlichen, bekannten Stoßschutzvorrichtung für Fußgänger (DE 30 51 041 C2) ist ein Stoßschutzquerträger vor oder bei einer Fußgängerkollision unter dem üblichen stabilen Stoßfänger des Fahrzeugs ausfahrbar.

Zudem ist eine Sicherheitseinrichtung an einem Fahrzeug bekannt, bei der nach Aktivierung einer im Stoßfänger angeordneten Aufprallsensorik durch Stellmittel eine Fronthaube im hinteren Bereich an der Frontscheibe angehoben wird. Als Stellmittel dazu sind eine Airbageinrichtung (DE-OS 28 14 107) oder eine Zylinder/Kolben-Einheit (DE-OS 28 41 315) bekannt. Dadurch ergibt sich im hinteren angehobenen Bereich der Fronthaube nahe der Frontscheibe eine günstigere Deformationskinematik insbesondere für einen Kopfaufprall einer Person.

Die vorstehenden, aktiv wirkenden Sicherheitseinrichtungen sind relativ aufwendig und führen dennoch nur zu einer teilweisen Verbesserung eines Fußgängeraufprallschutzes.

Zudem ist ein Fußgängeraufprallschutz bekannt (DE-OS 17 55 512) bei dem stoßgefährende Außenhautteile des Fahrzeugs mit einer Kunststoffschaumschicht überzogen sind. Um hier einen wirksamen Fußgängeraufprallschutz zu erreichen, ist die Kunststoffschaumschicht relativ dick und voluminös ausgeführt, was ungünstig die Außenabmessungen eines Fahrzeugs erhöht. Zudem können sich Probleme bei der Lackierung solcher Außenhautteile ergeben.

Allgemein sind Sandwichbauteile im Fahrzeugbau bekannt, die aus mehreren Schichten bestehen. Dabei sind beidseitig Deckschichten ggf. unterschiedlicher Stärke und aus unterschiedlichen Materialien vorgesehen, die mit einer strukturierten Zwischenschicht verbunden sind. Die Zwischenschicht kann beispielsweise aus Kunststoffschaum (DE 33 45 576 A1; DE 42 41 750 A1) oder aus einer Wabenstruktur (DE 42 32 953 A1) bestehen.

Aufgabe der Erfindung ist es, eine gattungsgemäße Karosseriehaube, insbesondere eine Fronthaube so weiterzubilden, daß der Fußgängerschutz bei einer Fußgänger-Fahrzeug-Kollision verbessert wird.

Diese Aufgabe wird mit den Merkmalen des Anspruchs 1 gelöst.

Gemäß Anspruch 1 umfaßt die Karosseriehaube eine als Verbundteil aufgebaute Haubenwand mit einem flächigen, stabilen Haubenträger, wenigstens einem Randteil als weichem Nasenteil (Softnose), einer flächig über dem Haubenträger angebrachten und mit diesem verbundenen, bei einem Aufprall energieabsorbierenden Zwischenschicht und mit einem mit der Zwischenschicht verbundenen und gegenüber dem Haubenträger schwimmenden Deckblech als Außenhaut. Das weiche Nasenteil (Softnose) ist bei einer Fronthaube als vorderer Haubenabschluß quer zur Fahrtrichtung angebracht.

Mit einer solchen Haubenausbildung, bei der in einem Verbundteil mehrere Haubenelemente miteinander verbunden sind, können diese Haubenelemente sicherheitstechnisch hinsichtlich einer Fahrzeug-Fußgänger-Kollision weitgehend getrennt ausgelegt und optimiert werden:

Insbesondere ist eine getrennte Auslegung für
- Kopfimpactoren (Kind, Erwachsener),
- Oberschenkelimpactor,
- Beinimpactor,
beispielsweise zur Erfüllung geplanter Schutzkriterien der einzelnen Impactoren möglich.

Weiter ist eine weitgehend getrennte Auslegung
- zur Energieaufnahme bei unterschiedlichen Kraft/Weg-Kennungen, und
- Haubensteifigkeiten für den Fahrbetrieb
möglich.

Ebenfalls ist eine weitgehend getrennte Auslegung
- von Oberflächengüten,
- Steifigkeiten, und
- Energieabsorptionen
möglich.

Allgemein ergibt sich damit vorteilhaft ein einfacher Haubenaufbau mit großen Konstruktionsfreiräumen und guten Optimierungsmöglichkeiten für einen wirksamen Fußgängeraufprallschutz.

Nachfolgend werden dazu noch konkrete Ausbildungen und Weiterbildungen angegeben.

Das Randteil als weiches Nasenteil und Deformationselement kann je nach den Gegebenheiten aus mehreren, verschiedenen Materialien, vorzugsweise mit einer Schaumfüllung und/oder einer inneren Wabenstruktur und/oder Verstärkungsstegen und/oder einem Außenhautüberzug hergestellt sein. Zudem soll das Randteil mit seiner Außenhaut flächenbündig an das Deckblech anschließen. Gegebenenfalls kann auch das Nasenteil von einem Deckblech überdeckt sein. Das Randteil als Nasenteil ist in jedem Fall als Frontbegrenzung in Fahrtrichtung einer Fronthaube vorzusehen. Gegebenenfalls können jedoch auch die Seitenränder einer Fronthaube und/oder der Heckabschluß und die Seitenränder einer Heckhaube entsprechend ausgebildet sein.

Solche Randteile, insbesondere als Nasenteil können mit dem Haubenträger durch gängige Verbindungstechniken, wie Schrauben, Schweißen, Kleben oder Nieten fest verbunden sein, wobei ggf. Verbindungsteile mit eingeschaltet sind.
Der Haubenträger als stabiles Grundelement trägt die erforderlichen Scharniere und Schloßteile und weist für eine stabile, gewichtsgünstige Bauweise eine Profilstruktur, ggf. aus unterschiedlichen Materialien auf.

Eine solche Profilstruktur kann je nach den Gegebenheiten und Anforderungen als Blechteil oder Gußteil aus Stahl und/oder aus einer Aluminiumlegierung und/oder aus Magnesium mit Längsrippen, Querrippen oder Kreuzrippen hergestellt sein.

Die Zwischenschicht ist als Deformationselement ausgebildet und kann dazu einfach als Kunststoffschaumauflage, als Wabenstruktur oder aus Stegen (aus dem Unterblech U-förmig gestanzt und hochgebogen) hergestellt sein. Dabei sind je nach den Anforderungen und speziellen Gegebenheiten auch unterschiedliche, lokale Ausbildungen der Zwischenschicht mit unterschiedlichem Deformationsverhalten möglich.

In einer besonders bevorzugten Ausführungsform wird das Deckblech als Aufpralllastverteiler mit unterschiedlichen lokalen Steifigkeiten ausgebildet. Dabei soll das Deckblech insbesondere im zur Fahrgastzelle hin liegenden Bereich, bei einer Fronthaube im Bereich der Frontscheibe, eine gegenüber der anderen Fläche höhere Steifigkeit aufweisen. Eine solche höhere Steifigkeit kann mit einfachen, allgemein bekannten Maßnahmen erzielt werden: z. B. können flächig zusammengefügte Blechteile unterschiedlicher Blechqualitäten und/oder Blechstärken (tailored blank) vorteilhaft eingesetzt werden.

Für einen Seitenkantenabschluß wird in einer konkreten Ausführungsform vorgeschlagen, das Deckblech über den jeweiligen Seitenrand der Zwischenschicht und den Haubenträger schwimmend nach unten zu führen.

Anhand einer Zeichnung wird die Erfindung näher erläutert.

Es zelgen:
- Fig. 1: eine Teilansicht eines Frontwagenbereichs eines Personenkraftwagens mit in Fahrzeuglängsrichtung geschnittener Fronthaube, und
- Fig. 2: einen Querschnitt durch die Fronthaube entlang der Linie A-A aus Fig. 1.

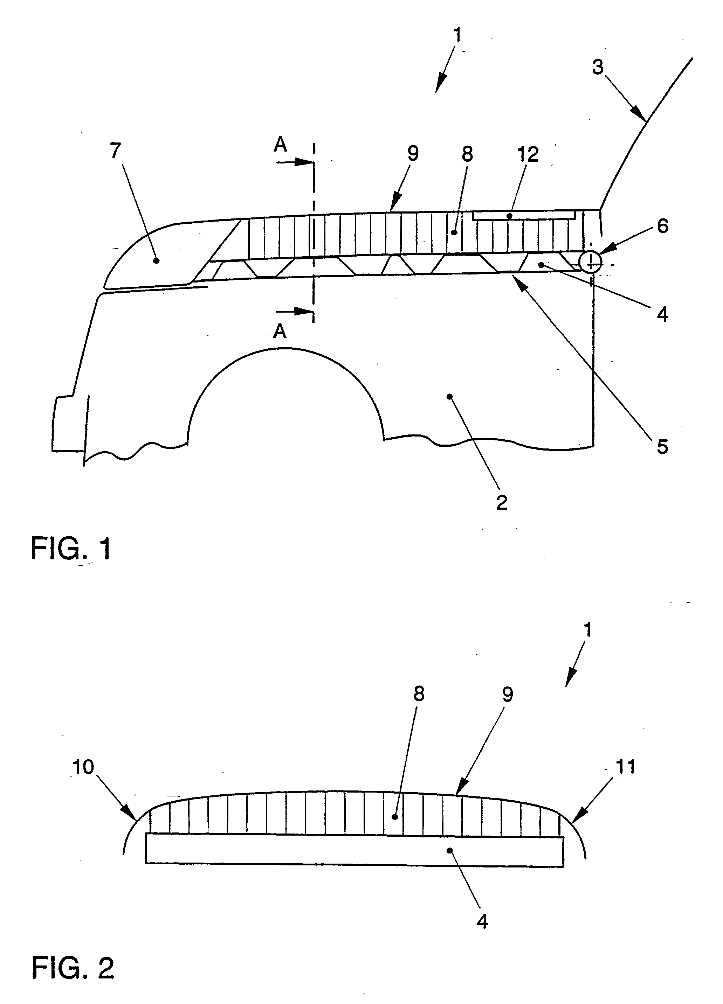

In den Fig. 1 und 2 sind in einem Längsschnitt und in einem Querschnitt eine Fronthaube 1 einer Fahrzeugkarosserie dargestellt, wobei ein Frontwagenbereich 2 und eine Frontscheibe 3 schematisch angedeutet sind.

Die Fronthaube 1 ist als Verbundbauteil aufgebaut und umfaßt als Basisteil einen Haubenträger 4. Der Haubenträger 4 ist ein flächiges, stabiles Bauteil, beispielsweise in der Art einer Sandwichplatte mit einer Profilstruktur als Blechteil oder Gußteil. Als Profilstruktur 5 wird hier eine Querverrippung verwendet. Es können alternativ oder zusätzlich auch Längsrippen oder Kreuzrippen vorgesehen sein. Zur Herstellung können materialeinheitlich oder in einer Kombination Stahl und/oder eine Aluminiumlegierung und/oder Magnesium verwendet sein. Am Haubenträger 4 sind zudem erforderliche Scharniere 6 und (nicht dargestellte) Schloßteile angeordnet.

Als Frontabschluß der Fronthaube 1 ist ein weiches Nasenteil 7 (Softnose) vorgesehen, das mit üblichen Verbindungstechniken mit dem Haubenträger 4 verbunden ist. Das Nasenteil 7 verläuft über den gesamten Frontquerbereich der Fronthaube 1 und enthält eine deformierbare und energieabsorbierende Schaumfüllung und/oder Wabenstruktur ggf. mit Verstärkungsstegen und Anschlußteilen.

Auf dem Haubenträger 4 ist eine, bei einem Aufprall energieabsorbierende Zwischenschicht 8 aus einem Polstermaterial als Deformationselement angebracht. Dieses Polstermaterial kann insbesondere eine Kunststoffschaumauflage aus Hartschaum oder eine Wabenstruktur sein. Der Schaum kann gelocht sein, wodurch er zugleich der Schalldämmung dient. Die Zwischenschicht 8 kann auch aus Stegen aufgebaut sein.

Über der Zwischenschicht 8 und mit dieser verbunden liegt ein Deckblech 9 als Außenhaut, das flächenbündig an eine Außenhaut des Nasenteils 7 anschließt oder dieses als Außenhaut mit überdeckt. In einem zur Fahrgastzelle hin, bzw. zur Frontscheibe 3 hin liegenden Bereich 12 ist die Blechstärke des Deckblechs 9 ersichtlich stärker gewählt, um dort eine im Vergleich zur Umgebung höhere Steifigkeit bei einem Aufprall zu erhalten. Dazu ist das Deckblech aus Blechteilen unterschiedlicher Blechstärke zusammengesetzt (tailored blank).

Wie aus Fig. 2 ersichtlich, ist ein Seitenkantenabschluß dadurch gebildet, daß das Deckblech 9 mit Seitenrändern 10, 11 über den Bereich der Zwischenschicht 8 und des Haubenträgers 4 nach unten geführt ist.

Die dargestellte Fronthaube hat die sicherheitstechnische Funktion, bei einem Fußgängeraufprall die gefährdeten Körperteile gedämpft unter Energieabsorption abzufangen. Die entsprechenden Anforderungen und Belastungen sind an der Fronthaube lokal jeweils unterschiedlich. Durch entsprechende Optimierungen der zu der Fronthaube 1 verbundenen Einzelelemente hinsichtlich der Materialwahl, der Materialstärken und der Strukturen kann gestellten Sicherheitskriterien Rechnung getragen werden.

### BEZUGSZEICHENLISTE

- 1: Fronthaube
- 2: Frontwagenbereich
- 3: Frontscheibe
- 4: Haubenträger
- 5: Profilstruktur
- 6: Scharnier
- 7: Nasenteil
- 8: Zwischenschicht
- 9: Deckblech
- 10: Seitenrand
- 11: Seitenrand
- 12: Bereich

## Patentansprüche

1. Karosseriehaube, insbesondere Fronthaube (1) eines Kraftfahrzeugs, mit einer als Verbundbauteil aufgebauten Haubenwand, die aus einem flächigen, stabilen Haubenträger (4),
aus einer mit dem Haubenträger (4) verbundenen und flächig darüber angebrachten, bei einem Aufprall energieabsorbierenden Zwischenschicht (8) als Deformationselement, und
aus einem mit der Zwischenschicht (8) verbundenen Deckblech (9) als Außenhaut besteht,
**dadurch gekennzeichnet,**
**daß** die Haubenwand ein mit dem Haubenträger (4) verbundenes Randteil als weiches Nasenteil (7) aufweist und daß das Deckblech (9) gegenüber dem Haubenträger (4) schwimmend angeordnet ist.

2. Karosseriehaube nach Anspruch 1, **dadurch gekennzeichnet, daß** das Randteil als weiches Nasenteil (7) und Deformationselement aus mehreren verschiedenen Materialien vorzugsweise mit einer Schaumfüllung und/oder einer inneren Wabenstruktur und/oder Verstärkungsstegen und/oder einem Außenhautüberzug hergestellt ist und an der Außenhaut flächenbündig an das Deckblech (9) anschließt oder vom Deckblech (9) überdeckt ist.

3. Karosseriehaube nach Anspruch 1 oder Anspruch 2, **dadurch gekennzeichnet, daß** das Nasenteil (7) mit dem Haubenträger (4) durch Schrauben und/oder Schweißen und/oder durch Kleben und/oder durch Nieten fest verbunden ist.

4. Karosseriehaube nach einem der Ansprüche 1 bis 3, **dadurch gekennzeichnet, daß** der Haubenträger (4) Scharniere (6) und Schloßteile trägt.

5. Karosseriehaube nach einem der Ansprüche 1 bis 4, **dadurch gekennzeichnet, daß** der Haubenträger (4) eine Profilstruktur (5), vorzugsweise aus unterschiedlichen Materialien, aufweist.

6. Karosseriehaube nach Anspruch 5, **dadurch gekennzeichnet, daß** die Profilstruktur (5) als Blechteil oder Gußteil aus Stahl und/oder aus einer Aluminiumlegierung und/oder aus Magnesium mit Längsrippen, Querrippen oder Kreuzrippen hergestellt ist.

7. Karosseriehaube nach einem der Ansprüche 1 bis 6, **dadurch gekennzeichnet, daß** die Zwischenschicht (8) aus energieabsorbierendem Polstermaterial hergestellt ist und vorzugsweise eine Kunststoffschaumauflage oder eine Wabenstruktur ist.

8. Karosseriehaube nach einem der Ansprüche 1 bis 7, **dadurch gekennzeichnet, daß** das Deckblech (9) als Aufpralllastverteiler mit unterschiedlichen lokalen Steifigkeiten ausgebildet ist.

9. Karosseriehaube nach Anspruch 8, **dadurch gekennzeichnet, daß** das Deckblech (9) im zur Fahrgastzelle hin liegenden Bereich (12) eine höhere Steifigkeit, vorzugsweise durch eine höhere Blechstärke, aufweist.

10. Karosseriehaube nach einem der Ansprüche 1 bis 9, **dadurch gekennzeichnet, daß** das Deckblech (9) als Seitenkantenabschluß mit Seitenrändern (10, 11) über die Zwischenschicht (8) und den Haubenträger (4) schwimmend nach unten geführt ist.

## Claims

1. Body hood, in particular front hood or bonnet (1) of a motor vehicle, having a hood wall which is constructed as a composite component, **characterized in that** the hood wall comprises a sheet-like, stable hood support (4), an edge part, which is connected to the hood support (4), as a soft nose part (7), an intermediate layer (8), as deformation element, which is connected to the hood support (4) and is fitted in a sheet-like manner over the latter and absorbs energy during an impact, and a covering panel (9), as outer skin, which is connected to the intermediate layer (8) and therefore floats relative to the hood support (4).

2. Body hood according to Claim 1, **characterized in that** the edge part, as soft nose part (7) and deformation element, is produced from a plurality of different materials preferably together with a foam filling and/or an inner honeycomb structure and/reinforcing web and/or an outer-skin covering, and that the outer skin adjoins flush with the covering panel (9) or is covered by the covering panel (9).

3. Body hood according to Claim 1 or Claim 2, **characterized in that** the nose part (7) is connected fixedly to the hood support (4) by screwing and/or welding and/or by bonding and/or by riveting.

4. Body hood according to one of Claims 1 to 3, **characterized in that** the hood support (4) contains hinges (6) and lock parts.

5. Body hood according to one of Claims 1 to 4, **characterized in that** the hood support (4) has a profiled structure (5) preferably consisting of different materials.

6. Body hood according to Claim 5, **characterized in that** the profiled structure (5) is produced as a sheet-metal part or casting made of steel and/or of an aluminium alloy and/or of magnesium with longitudinal ribs, transverse ribs or cross ribs.

7. Body hood according to one of Claims 1 to 6, **characterized in that** the intermediate layer (8) is produced from energy-absorbing cushioning material and is preferably a foamed plastic layer or a honeycomb structure.

8. Body hood according to one of Claims 1 to 7, **characterized in that** the covering panel (9) is designed as an impact-load distributor having differing local rigidity.

9. Body hood according to Claim 8, **characterized in that** the covering panel (9) has greater rigidity, preferably because of a greater sheet-metal thickness, in the region (12) facing the passenger cell.

10. Body hood according to one of Claims 1 to 9, **characterized in that** as a side-edge border, the covering panel (9) is guided downwards with side edges (10, 11) floating over the intermediate layer (8) and the hood support (4).

## Revendications

1. Capot de carrosserie, en particulier capot avant (1) d'un véhicule à moteur, comprenant une paroi de capot construite sous forme d'élément composite, **caractérisé en ce que** la paroi de capot se compose d'un support de capot (4) stable et plat, d'une partie de bord raccordée au support de capot (4) et réalisée sous forme de partie de nez (7) (Softnose), d'une couche intermédiaire (8) absorbant l'énergie en cas de choc, connectée au support de capot (4) et appliquée à plat pardessus celui-ci, servant d'élément de déformation, et d'une tôle de recouvrement (9) connectée à la couche intermédiaire (8) et flottant ainsi par rapport au support de capot (4), servant de peau extérieure.

2. Capot de carrosserie selon la revendication 1, **caractérisé en ce que** la partie de bord est fabriquée sous forme d'une partie de nez souple (7) et d'un élément de déformation constitué de plusieurs matériaux différents de préférence avec un remplissage de mousse et/ou une structure interne en nid d'abeilles et/ou des baguettes de renforcement et/ou un revêtement de peau extérieure, et se raccorde à la peau extérieure à plat contre la tôle de recouvrement (9) ou est recouverte par la tôle de recouvrement (9).

3. Capot de carrosserie selon la revendication 1 ou la revendication 2, **caractérisé en ce que** la partie de nez (7) est raccordée fixement au support de capot (4) par des vis et/ou par soudage et/ou par collage et/ou par rivetage.

4. Capot de carrosserie selon l'une quelconque des revendications 1 à 3, **caractérisé en ce que** le support de capot (4) porte des charnières (6) et des parties de serrure.

5. Capot de carrosserie selon l'une quelconque des revendications 1 à 4, **caractérisé en ce que** le support de capot (4) présente une structure profilée (5) de préférence constituée de matériaux différents.

6. Capot de carrosserie selon la revendication 5, **caractérisé en ce que** la structure profilée (5) est fabriquée sous forme de pièce en tôle ou de pièce coulée en acier et/ou à partir d'un alliage d'aluminium et/ou de magnésium avec des nervures longitudinales, des nervures transversales ou en croix.

7. Capot de carrosserie selon l'une quelconque des revendications 1 à 6, **caractérisé en ce que** la couche intermédiaire (8) est fabriquée à partir d'un matériau de coussin absorbant l'énergie et est de préférence un recouvrement de mousse synthétique ou une structure en nid d'abeilles.

8. Capot de carrosserie selon l'une quelconque des revendications 1 à 7, **caractérisé en ce que** la tôle de recouvrement (9) est réalisée sous forme de distributeur de charge d'impact avec différentes rigidités locales.

9. Capot de carrosserie selon la revendication 8, **caractérisé en ce que** la tôle de recouvrement (9) présente, dans la région (12) se trouvant vers l'habitacle du véhicule, une rigidité plus élevée, de préférence par une épaisseur de tôle plus importante.

10. Capot de carrosserie selon l'une quelconque des revendications 1 à 9, **caractérisé en ce que** la tôle de recouvrement (9) est guidée vers le bas en flottant au-dessus de la couche intermédiaire (8) et du support de capot (4), sous forme de terminaison d'arête latérale avec des bords latéraux (10, 11).
